# EUROPEAN PATENT APPLICATION

(11) **EP 2 372 267 A2**
(43) Veröffentlichungstag der Anmeldung: **05.10.2011**
(21) Anmeldenummer: 11001880.1
(22) Anmeldetag: 07.03.2011
(51) Int. Cl.: F24J 2/52

(54) **Haltegestell für Solarmodule**

(30) Priorität: 08.03.2010 DE 102010010696
(71) Anmelder: Envalue GmbH, 94544 Hofkirchen (DE)
(72) Erfinder: Haslinger, Rüdiger, 94496 Ortenburg (DE)
(74) Vertreter: advotec.

(57) **Zusammenfassung**

Haltegestell (1) für Solarmodule und/oder Fotovoltaikmodule, das mindestens teilweise aus Polymerbeton gefertigt ist.

## Beschreibung

Die vorliegende Erfindung betrifft ein Haltegestell für Solarmodule und/oder Fotovoltaikmodule.

Derartige Haltegestelle sind aus dem Stand der Technik bekannt und werden aus Aluminium oder Eisenblech gefertigt. Die Haltegestelle aus dem Stand der Technik weisen diverse Nachteile auf. So müssen diese aufgrund des geringen Gewichtes an einem Untergrund (in der Regel einem Dach) befestigt werden. Hierzu muss der Untergrund (zum Beispiel Dach) mit einem geeigneten Werkzeug (zum Beispiel Dübel) durchdrungen werden. Dies hat natürlich diverse Nachteile für den zu durchdringenden Untergrund, wie beispielsweise ein Dach (zum Beispiel Undichtigkeitsprobleme).

Aufgrund der Tatsache, dass die aus dem Stand der Technik bekannten Haltegestelle aus Metall bei der Herstellung gekantet werden müssen und daher Knickstellen entstehen, bildet sich oft Rost an diesen Stellen. Auch die Stabilität leidet unter diesen Knickstellen. Bei der Verwendung von Aluminium als Metall entsteht zwar kein Rost. Die Haltegestelle müssen jedoch dicker ausgebildet werden und sind daher teurer in der Herstellung.

Ein weiterer Nachteil der Haltegestelle aus dem Stand der Technik besteht darin, dass sie relativ aufwendig in der Herstellung sind, da die Formbarkeit der verwendeten Materialien oft nicht besonders gut ist. Die verwendeten Materialien, wie beispielsweise Eisen weisen eine geringe Elastizität auf, was die Stabilität und die Festigkeit der bekannten Haltegestelle vermindert. Auch die Wärmeisolierung lässt bei den Haltegestellen aus dem Stand der Technik zu wünschen übrig.

Ein weiterer Nachteil der Haltegestelle aus dem Stand der Technik besteht darin, dass in das Metall Vorbohrungen für Befestigungsmittel eingebracht werden müssen. Dies ist mit Materialschwund verbunden.

Ein weiterer Nachteil der Haltegestelle aus dem Stand der Technik besteht darin, dass die Haltbarkeit ebenfalls begrenzt ist. Die Materialien werden oft durch Wasser oder Säuren aus der Umwelt angegriffen.

Der vorliegenden Erfindung liegt die Aufgabe zugrunde, ein Haltegestell für Solannodule und/oder Fotovoltaikmodule zur Verfügung zu stellen, welches die Nachteile aus dem Stand der Technik überwindet.

Diese Aufgabe wird gelöst durch ein Haltegestell für Solarmodule und/oder Fotovoltaikmodule, welches dadurch gekennzeichnet ist, dass es mindestens teilweise aus Polymerbeton gefertigt ist.

Durch die Verwendung von Polymerbeton als Material für die erfindungsgemäßen Haltegestelle können sämtliche, oben genannte Nachteile der Haltegestelle aus dem Stand der Technik überwunden werden.

So müssen die erfindungsgemäßen Haltegestelle aufgrund ihres hohen Gewichtes nicht mehr auf einem Untergrund befestigt werden. Hierdurch entfällt beispielsweise eine Dachdurchdringung beim Aufstellen einer Solaranlage auf einem Gebäudedach.

Auch die Herstellung der erfindungsgemäßen Haltegestelle ist wesentlich vereinfacht. So werden die erfindungsgemäßen Haltegestelle durch Formgießen hergestellt. Dadurch entfallen Arbeiten wie beispielsweise Abkanten oder Vorbohren. Ein großer Vorteil des Polymerbetons besteht hierbei darin, dass dieses schnell aushärtet. Auch ist eine einfache Anpassung an verschiedene Gegebenheiten (zum Beispiel unterschiedliche Schneelastzonen) durch Variation der Materialstärken möglich. Durch die Herstellung durch Fonngießen ist kaum Materialschwund gegeben.

Durch die Tatsache, dass das erfindungsgemäße Haltegestell aus Polymerbeton gefertigt ist, weist dieses auch eine deutlich bessere Elastizität auf, was zu einer Erhöhung der Festigkeit und Stabilität führt. Damit einhergehend eröffnet sich ein weiterer Vorteil, die Seiten mit größeren Öffnungen auszubilden und damit für eine bessere Hinterlüftung zu sorgen (siehe Figurenbeschreibung).

Ein weiterer wichtiger Vorteil des erfindungsgemäßen Haltegestells besteht in der guten thermischen Isolierung. Eine derartige Isolierung ist mit den Haltegestellen aus dem Stand der Technik niemals zu erzielen.

Ein weiterer Vorteil der erfindungsgemäßen Haltegestelle besteht in der Möglichkeit einer optischen Anpassung durch die Auswahl einer unbegrenzten Farbenvielfalt. So können bereits bei der Zubereitung der Polymerbetonmischung die gewünschten Farben beigesetzt werden. Dadurch wird ein Lackieren des Haltegestells nach der Herstellung überflüssig.

Ein weiterer entscheidender Vorteil des erfindungsgemäßen Haltegestells besteht darin, dass ohne Vorbohren oder Setzen von Dübeln in das Material geschraubt werden kann. Durch die Eigenschaften des Polymerbetons ist das eingeschraubte Gewinde automatisch dicht.

Aufgrund der Möglichkeit, die erfindungsgemäßen Haltegestelle sehr dünnwandig auszubilden, kann eine extrem hohe Stabilität erzielt werden. Weitere Vorteile des erfindungsgemäßen Haltegestells bestehen in der hohen Haltbarkeit, der wasserabweisenden Eigenschaften sowie der Feinporigkeit, welche Frostschäden vermeidet. Des Weiteren sind die erfindungsgemäßen Haltegestelle absolut säurebeständig und gegen Umwelteinflüsse quasi resistent.

Polymerbeton ist ein Verbundwerkstoff, bestehend aus einem (mineralischen) Füllstoffgemisch und einem Bindemittel und wird aufgrund seiner Zusammensetzung auch als Mineralguß bezeichnet. Das Bindemittel ist in der Regel auf Reaktionsharzbasis, wobei als Reaktionsharz Polyesterharz verwendet werden kann. Weitere mögliche Bindemittel sind Kunstharze, wie zum Beispiel Methacrylate, Epoxide, Phenole, Furane, Vinylester. Beispiele für Füllstoffe sind Quarzsand, Quarzkies, Gesteinsmehl, Marmor, synthetische Granitchips, Granit, Basalt, Zement, SiC, Kalk, Dolomit, Calciumcarbonat, Gips, Aluminiumhydrat. Ferner verwendbar sind Glasfasern, Glasfiebergewebe, Stahlfasern oder Metallspäne. Bei einer besonders bevorzugten Ausführungsform des erfindungsgemäßen Haltegestells ist dieses im Wesentlichen aus Polymerbeton mit Silikon und/oder Acrylharz und/oder Polyesterharz gefertigt, wobei es vorzugsweise mindestens teilweise aus Polymerbeton, umfassend ca. 20 % Polyesterharz und ca. 80 % Quarzsand gefertigt ist. Haltegestelle aus einem derartigen Polymerbeton zeichnen sich durch ein hervorragendes Dämpfungsverhalten, niedrige innere Spannungen, minimalen Schwund für hohe Abformgenauigkeit und einen geringen thermischen Ausdehnungskoeffizienten aus. Bei Verwendung von Silikon hat sich herausgestellt, dass eingeschraubte Gewinde besonders dicht sind.

Weitere Vorteile des Polymerbetons sind, dass das Gestell dünnwandig und damit Gewicht sparend ausgebildet werden kann. Ferner können Öffnungen, Anformungen und Aussparungen in einem Guss ohne Beeinträchtigungen des Bauteils in dieses integriert werden.

Eine besonders bevorzugte Ausführungsform des erfindungsgemäßen Haltegestells umfasst mindestens zwei, vorzugsweise vier aus Polymerbeton gefertigte Rahmenelemente, wobei jeweils mindestens zwei Rahmenelemente nebeneinander und vorzugsweise jeweils mindestens zwei Rahmenelemente hintereinander angeordnet sind, wobei sowohl die nebeneinander angeordneten Rahmenelemente als auch die hintereinander angeordneten Rahmenelemente jeweils über mindestens ein längliches Verbindungselement, beispielsweise Verbindungsblech, insbesondere aus Aluminium miteinander verbunden sind. Insbesondere durch die Verbindung sowohl nebeneinander als auch hintereinander angeordneter Rahmenelemente ist eine zweidimensionale Vernetzung des erfindungsgemäßen Haltegestells möglich. Durch eine derartige Netzbildung wird eine optimale Gewichtsverteilung erreicht, was wiederum zu einer wesentlich geringeren Punktbelastung (beispielsweise auf Flachdächern) führt.

Bei einer bevorzugten Ausführungsform des erfindungsgemäßen Haltegestells umfassen die Rahmenelemente jeweils eine Basis, vorzugsweise eine längliche Fußplatte zum Aufsetzen auf einen Untergrund, sowie einen schräg nach oben verlaufenden Modulaufladeabschnitt, vorzugsweise eine längliche Auflageleiste, wobei die Basis und der Modulauflageabschnitt an ihren beiden Enden über einen vorderen bzw. hinteren Befestigungsabschnitt zur Befestigung der Verbindungselemente miteinander verbunden sind. Vorzugsweise sind die Rahmenelemente, umfassend jeweils eine Basis, einen Modulauflageabschnitt sowie zwei Befestigungsabschnitte einstückig ausgebildet. Besonders bevorzugt werden diese durch Formgießen aus Polymerbeton hergestellt, wobei etwaige Aussparungen (zum Beispiel zur Durchführung von Befestigungsmitteln) bereits beim Gießen ausgebildet werden. Die Basis schließt mit dem Modulauflageabschnitt in der Regel einen spitzen Winkel ein. Die Rahmenelemente sind in der Regel annähernd dreiecksförmig ausgebildet. Die Basisabschnitte der Rahmenelemente sind in der Regel als flache Leisten ausgebildet. Durch diese Konstruktion wird eine besonders materialsparende und stabile Konstruktion erreicht.

Bei einer bevorzugten Ausführungsform des erfindungsgemäßen Haltegestells sind die nebeneinander angeordneten Rahmenelemente über ihre hinteren und vorzugsweise auch über ihre vorderen Befestigungsabschnitte der länglichen Verbindungselemente miteinander verbunden, wobei die Rahmenelemente mit den Verbindungselementen insbesondere durch Selbstbohrschrauben miteinander verschraubt sind. Auf diese Art und Weise werden geschlossene Stirnseiten des Haltegestells erreicht. Die Verbindungselemente (vorzugsweise Verbindungsbleche) wirken quasi als Windschott, als Windleitbleche sowie zur Aussteifung des Gestells. Durch die genannten Platten wird eine Spoilerwirkung erzielt, sodass das Haltegestell bei Wind auf den Boden gepresst wird.

Vorzugsweise sind die Verbindungselemente durch Kantungen der Längsseiten an die Form der Befestigungsabschnitte der Rahmenelemente angepasst. So können diese mit Vorteil formschlüssig an den Rahmenelementen befestigt werden (beispielsweise ähnlich einer Klammer, siehe Figurenbeschreibung). Dadurch ist eine schnelle und einfache Befestigung der Verbindungselemente an den Befestigungsabschnitten der Rahmenelemente möglich.

Bei einer bevorzugten Ausführungsform des erfindungsgemäßen Haltegestells überragen sowohl der vordere als auch der hintere Befestigungsabschnitt den Modulauflageabschnitt, insbesondere eine Auflagefläche für Module, wobei der vordere Befestigungsabschnitt im unteren Bereich (Bereich der Basis) vorzugsweise eine Vertiefung, zum Beispiel Einkerbung aufweist. Die den Modulauflageabschnitt überragenden Teilabschnitte der Befestigungsabschnitte dienen der formschlüssigen Anpassung der Verbindungselemente (siehe Figuren). Die oben genannten Vertiefungen in einem unteren Bereich der Befestigungsabschnitte wirken als Verstellbereiche zum Verstellen der Verbindungselemente zur Anpassung der Gesamtvorrichtung an Unebenheiten im Untergrund (siehe Figuren).

Mit Vorteil weisen die Rahmenelemente seitlich angeordnete Verstärkungselemente auf, die vorzugsweise Aussparungen aufweisen. Diese Aussparungen dienen beispielsweise der Hinterlüftung des erfindungsgemäßen Gestells. Ferner tragen die Aussparungen zu einer erheblichen Gewichtsreduzierung bei.

Vorzugsweise weisen die, die hintereinander angeordneten Rahmenelemente miteinander verbindenden Verbindungselemente einen U-förmigen Querschnitt auf. Durch diesen U-förmigen Querschnitt können zum Beispiel in idealer Weise zwei unmittelbar nebeneinander stehende Rahmenelemente miteinander verbunden werden. Ferner kann bei Bedarf Polymerbeton in die U-förmigen Verbindungselemente eingefüllt werden, falls eine Erhöhung des Gewichts vonnöten ist.

Die vorliegende Erfindung betrifft ferner einen Kit zum Errichten eines erfindungsgemäßen Haltegestells, umfassend mindestens zwei Rahmenelemente aus Polymerbeton sowie mindestens ein Verbindungselement zum Verbinden der Rahmenelemente.

Die vorliegende Erfindung betrifft ferner die Verwendung von Polymerbeton zur Herstellung von Haltegestellen für Solar- und/oder Fotovoltaikmodulen.

Weitere Merkmale der Erfindung ergeben sich aus der nachfolgenden Beschreibung von bevorzugten Ausführungsbeispielen der Erfindung in Verbindung mit den Zeichnungen und den Unteransprüchen. Hierbei können die einzelnen Merkmale für sich allein oder in Kombination miteinander verwirklicht sein.

In den Zeichnungen zeigen:
- Figur 1:: ein erfindungsgemäßes Gestell (Gestelleinheit) mit einem Solannodul;
- Figur 2:: eine Seitenansicht des Gestells von Figur 1;
- Figur 3:: eine weitere Ausführungsform eines erfindungsgemäßen Gestells zum Tragen von mehreren Solarmodulen
- Figur 4:: eine Exposionsdarstellung einer weiteren Ausführungsform (bevorzugt) eines erfindungsgemäßen Gestells zum Tragen von mehreren Solarmo- dulen;

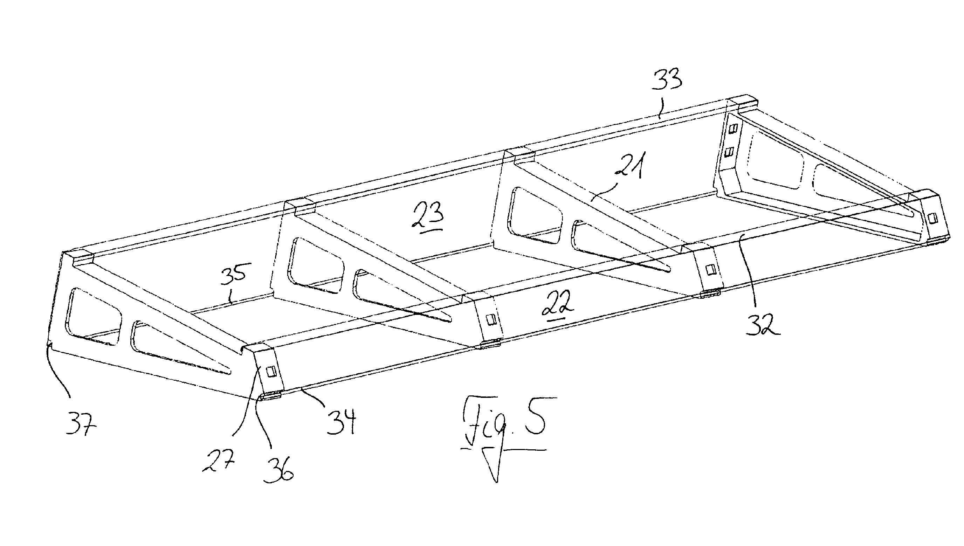

- Figur 5:: ein Gestell mit Elementen des Gestells von Figur 4 in zusammengesetz- tem Zustand;

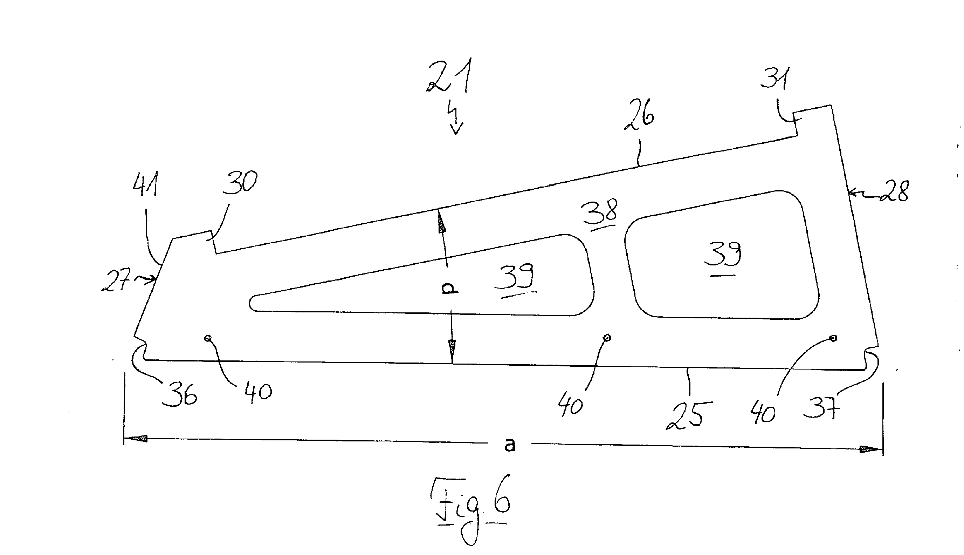

- Figur 6:: ein Rahmenelement der Ausführungsform von Figur 4 und 5;
- Figur 7:: eine schematische Darstellung eines erfindungsgemäßen Gestells aus Gestelleinheiten nach Figur 4.

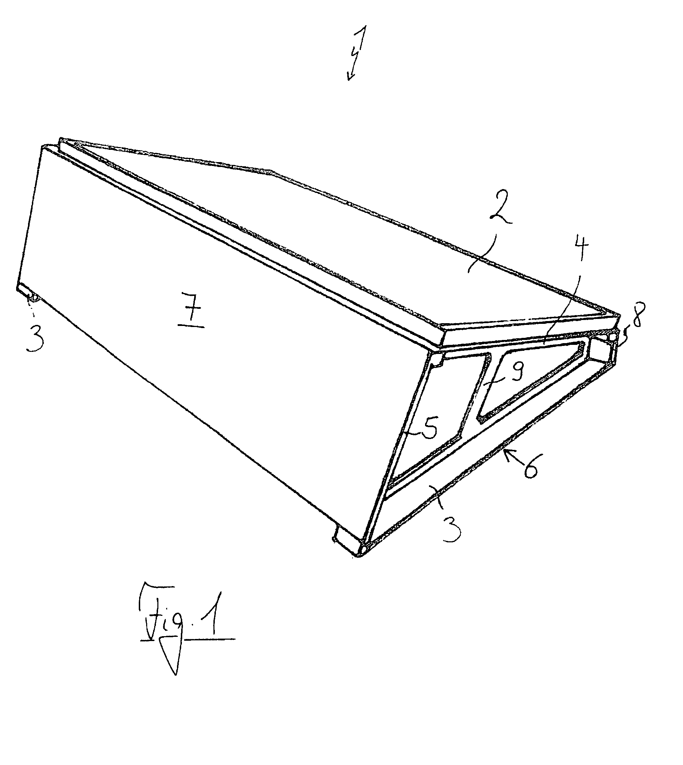

Figur 1 zeigt eine perspektivische Darstellung eines erfindungsgemäßen Haltegestelles 1 mit einem daran befestigten Solarmodul 2. Das Gestell 1. ist im Wesentlichen aus Polymerbeton auf Silikonbasis gefertigt. Das Gestell 1 wurde durch Ausgießen einer Form mit Polymerbeton hergestellt. Polymerbeton enthält im Gegensatz zu normalem Beton ein Polymer als Bindemittel. Der verwendete Polymerbeton umfasst Quarzsand (ca. 80 %) als Füllstoff, sowie Polyesterharz (ca. 20 %) als Binder.

Das Gestell 1 umfasst zwei längliche Fußleisten 3 sowie zwei mit den Fußleisten 3 verbundene, schräg nach oben führende Trägerstreben 4 zum Befestigen des Solannoduls 2. Die Fußleisten 3 schließen mit den Trägerstreben 4 jeweils einen spitzen Winkel α ein. An den stärker voneinander beabstandeten Enden der Fußleisten 3 und Trägerstreben 4 sind diese über Verbindungsstreben 5 miteinander verbunden. Die jeweiligen Fußleisten 3, Trägerstreben 4 und Verbindungsstreben 5 bilden zusammen jeweils ein Trägerelement 6. Das Gestell 1 umfasst zwei derartige Trägerelemente 6, welche an ihrer Rückseite über eine Aluminiumplatte 7 miteinander verbunden sind. Die Aluminiumplatte 7 fungiert zum einen als Verbindungsmittel zwischen den beiden Trägerelementen. Zum anderen fungiert die Aluminiumplatte 7 auch als Windschott und erzeugt bei Aufkommen von Wind eine Spoilerwirkung, wodurch das Gestell 1 auf den Untergrund gedrückt wird. Die Trägerelemente 6 sind auch an ihrer Vorderseite über eine Aluminiumplatte 8 miteinander verbunden, die schmäler ausgebildet ist als die Aluminiumplatte 7.

Zur Stabilitätserhöhung der Trägerelemente 6 sind die Fußleisten mit den Trägerstreben in einem mittleren Bereich über jeweils eine weitere Verbindungsstrebe 9 miteinander verbunden. Die Trägerelemente sind offen und nicht als mehr oder weniger geschlossene Platten ausgebildet. Dies bewirkt eine optimale Hinterlüftung des gesamten Gestells.

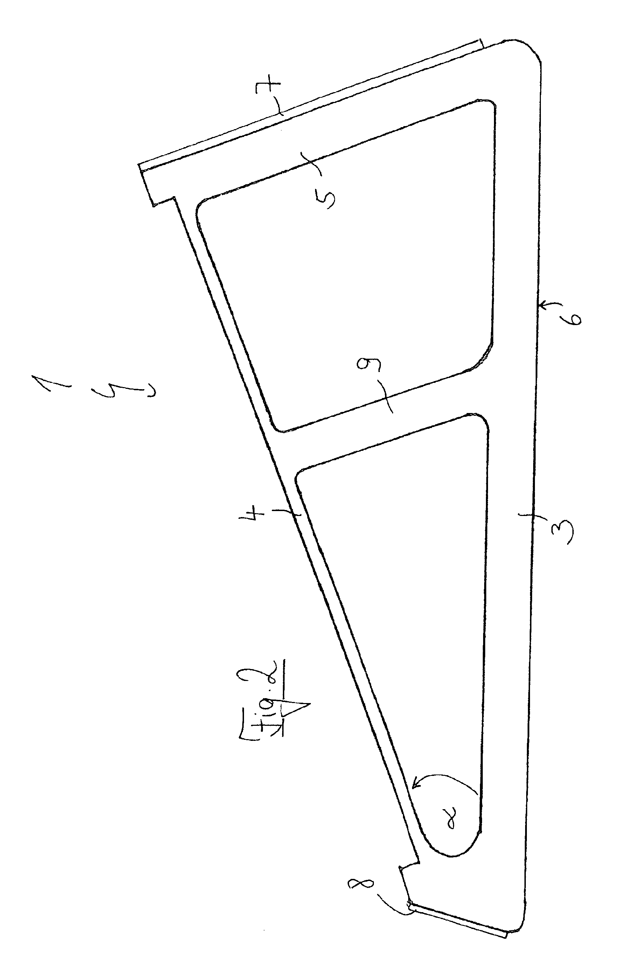

Figur 2 zeigt eine Seitenansicht des Gestells 1. In dieser Seitenansicht wurde das angebrachte Modul 2 weggelassen. In dieser Ansicht ist insbesondere ein Trägerelement 6, umfassend eine Fußleiste 3, eine Trägerstrebe 4 sowie Verbindungsstreben 5 und 9 gezeigt. In dieser Darstellung sind auch die beiden Aluminiumplatten 7 und 8 dargestellt.

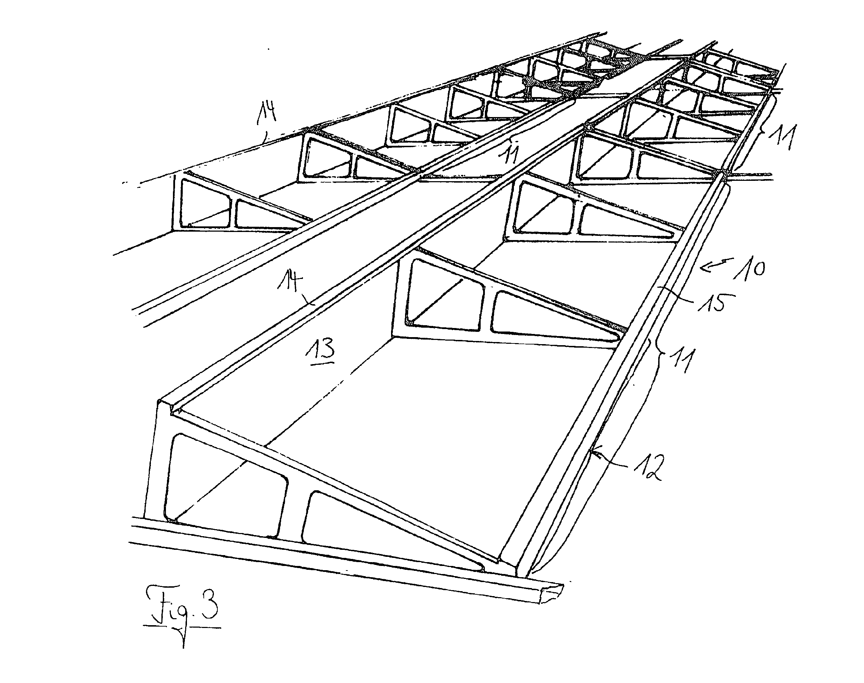

Figur 3 zeigt eine weitere Ausführungsform eines erfindungsgemäßen Haltegestelles 10. Das Haltegestell 10 ist aus mehreren Einheiten 11 aufgebaut, die wiederum jeweils aus drei Untereinheiten 12 aufgebaut sind. Die Untereinheiten 12 entsprechen vom Aufbau her dem Gestell 1 der Figuren 1 und 2. Die drei jeweils eine Einheit 11 bildenden Untereinheiten 12 sind an ihrer Rückseite durch eine einzige Aluminiumplatte 13 miteinander verbunden. Die Untereinheiten 12 einer Einheit 11 sind ferner durch eine quaderförmige Verbindungsstrebe 14 einstückig miteinander verbunden. Eine derartige Verbindungsstrebe kann auch bei der Ausführungsform gemäß Figuren 1 und 2 zwischen zwei Trägerelementen 6 angeordnet und mit diesen einstückig verbunden sein. Auch im vorderen Bereich der Einheiten 11 ist im vorliegenden Ausführungsbeispiel eine Verbindungsstange 15, welche die drei Untereinheiten 12 miteinander verbindet, angeordnet. Die einzelnen Einheiten 11 sind nebeneinander und hintereinander angeordnet und können ebenfalls miteinander verbunden, zum Beispiel formschlüssig oder kraftschlüssig miteinander verbunden sein. In diesem Ausführungsbeispiel sind sämtliche Gestellteile aus Polymerbeton gefertigt mit Ausnahme der verbindenden Aluminiumplatten.

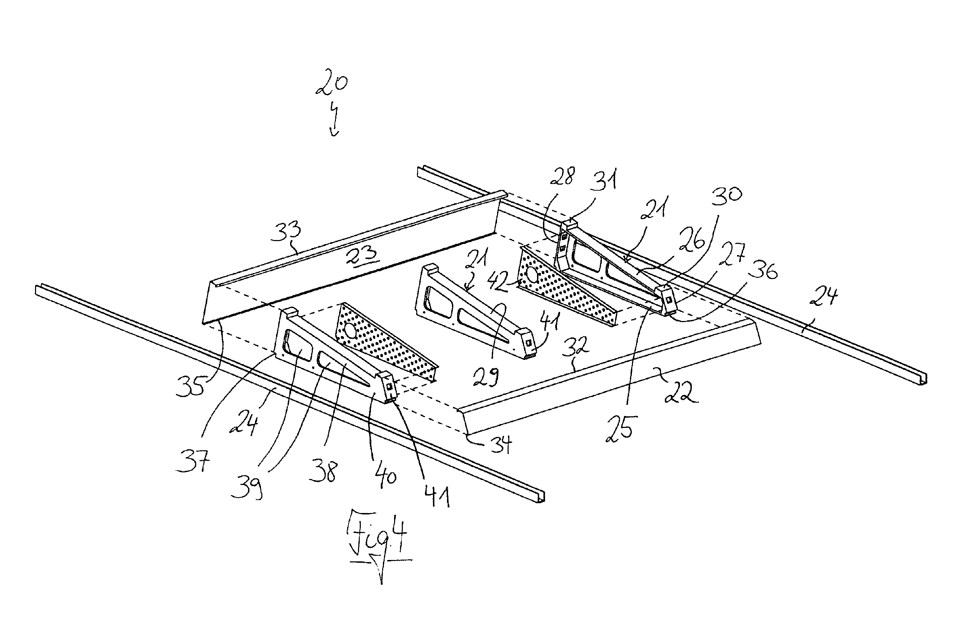

Figur 4 zeigt eine Exposionsdarstellung eines Ausschnittes aus einem besonders bevorzugten Haltegestell 20. Bei dieser Ausführungsform sind jeweils drei Rahmenelemente 21 nebeneinander angeordnet. Diese Rahmenelemente 21 sind an ihrer Vorderseite über ein vorderes Windleitblech 22 und an ihrer Hinterseite über ein hinteres Windleitblech 23 miteinander verbunden. Diese Gestelleinheit aus drei Rahmenelementen 21 und zwei Windleitblechen 22 und 23 ist mit weiteren derartigen Einheiten über seitlich angeordnete Sturmbleche 24 mit U-förmigem Querschnitt verbindbar. Über die Sturmbleche 24 können weitere Gestelleinheiten sowohl neben als auch hinter der gezeigten Gestelleinheit angeordnet werden, wodurch eine zweidimensionale Vernetzung des Gestells erreicht wird.

Die Rahmenelemente 21 sind aus Polymerbeton gegossen. Das hier verwendete Polymerbeton besteht aus ca. 80 % Quarzsand und 20 % Polyesterharz. Die Rahmenelemente 21 umfassen jeweils eine Fußplatte 25 zum Aufsetzen auf einen Untergrund, wie beispielsweise Flachdach, sowie eine schräg nach oben verlaufende längliche Auflageleiste 26. Die Fußplatte 25 und die Auflageleiste 26 eines Rahmenelements 21 sind an ihren beiden Enden über einen vorderen 27 bzw. hinteren 28 Befestigungsabschnitt zur Befestigung der Windleitbleche 22, 23 miteinander verbunden. Der vordere Befestigungsabschnitt 27 überragt die Auflagefläche 29 der Auflageleiste 26. Auch der hintere Befestigungsabschnitt 27 überragt die Auflagefläche 29 der Auflageleiste 26. Diese die Auflagefläche 29 überragenden Abschnitte 30, 31 des vorderen Befestigungsabschnitts 27 bzw. des hinteren Befestigungsabschnitts 28 dienen als Befestigungshilfen zur Befestigung der Windleitbleche 22 bzw. 23. Die Windleitbleche 22 und 23 sind an ihren oberen Längskanten U-förmig abgekantet und an die Form und Abmessungen der überragenden Abschnitte 30 bzw. 31 der Befestigungsabschnitte 27 bzw. 28 angepasst. Durch die angepasste Form der Windleitbleche 22 und 23 können diese in einfacher Art und Weise an den Befestigungsabschnitten 27 bzw. 28 eingehakt werden. Die obere Kantung des vorderen Windleitbleches ist mit dem Bezugszeichen 32 gekennzeichnet. Die obere Kantung des hinteren Windleitbleches ist mit dem Bezugszeichen 33 gekennzeichnet. Die Windleitbleche 22 bzw. 23 sind an ihrer unteren Längskante einfach gekantet. Die unteren Kantungen 34 bzw. 35 der Windleitbleche 22 bzw. 23 spielen mit Vertiefungen 36 bzw. 37 im unteren Bereich der Befestigungsabschnitte 27 bzw. 28 zusammen. Bei Unebenheiten im Untergrund können die Windleitbleche 22 bzw. 23 in den Vertiefungen 36 bzw. 37 nach oben verschoben werden, sodass die Unebenheiten ausgeglichen werden können und dadurch beispielsweise keine Matten zum Ausgleich der Unebenheiten untergelegt werden müssen. Ein derartiges Unterlegen unter die Rahmenelemente 21 verursacht eine starke Punktbelastung auf dem Untergrund (zum Beispiel Flachdach). Durch die Verstellmöglichkeit der Windleitbleche 22, 23 wird erreicht, dass trotz Unebenheiten diese Windleitbleche ständig gerade angeordnet sind. Müssen die Windleitbleche 22, 23 zum Ausgleich von Unebenheiten nach oben verschoben werden, heben sich diese an den überragenden Abschnitten 30 bzw. 31. der Befestigungsabschnitte 27 bzw. 28 leicht ab. Der dadurch entstehende Abstand zwischen den Windleitblechen 22 bzw. 23 und den Abschnitten 30 bzw. 31 kann durch Ausgießen mit Polymerbeton ausgeglichen werden.

Die Fußplatte 25 schließt mit der Auflageleiste 26 eines Rahmenelements 21 einen spitzen Winkel ein. Der Winkel zwischen der Fußplatte 25 und der Auflageleiste 26 eines Rahmenelements 21 ist an die Bedürfnisse anpassbar und legt die Neigung eines am Gestell 20 befestigten Solarmodule fest.

Die Rahmenelemente 21 weisen seitlich angeordnete Verstärkungswände 38 auf. Diese Verstärkungswände sind nicht geschlossen ausgebildet, sondern weisen große Aussparungen 39 zur Gewichtsreduzierung und Hinterlüftung auf. Ferner weisen die Verstärkungswände 38 kleine Aussparungen 40 zum Durchführen von Befestigungsmitteln, insbesondere von Schrauben auf. Durch diese Aussparungen 40 können Schrauben geführt werden, die beispielsweise zur Befestigung eines Rahmenelements 21 an einem Sturmblech 24 dient. Die genannten Aussparungen 39 und 40 sind eingegossene Aussparungen, das heißt, dass diese Aussparungen beim Gießen der Rahmenelemente 21 entstehen, und nicht nachträglich in die Rahmenelemente eingebracht werden müssen. Dadurch wird das Material geschont, da beispielsweise keine Erschütterungen durch ein nachträgliches Einbringen der Aussparungen nötig ist. Die Rahmenelemente 21 sind einstückig ausgebildet und werden durch Ausgießen einer entsprechenden Form mit Polymerbeton hergestellt.

Die vorderen Befestigungsabschnitte 27 der Rahmenelemente 21 weisen eine schräg nach oben verlaufende Anlagefläche 41 für das Windleitblech 22 auf. Durch diese schräge Fläche 41 wird erreicht, dass auch das Windleitblech 22 im montierten Zustand schräg steht. Dadurch entsteht bei starkem Wind eine Spoilerwirkung, welche das gesamte Gestell 20 auf den Untergrund drückt. Parallel zu den Verstärkungswänden 38 sind im vorliegenden Ausführungsbeispiel Lochbleche 42 an den Rahmenelementen 21 montiert. Diese Lochbleche 42 dienen unter anderem dazu, das Einnisten von Vögeln zu verhindern.

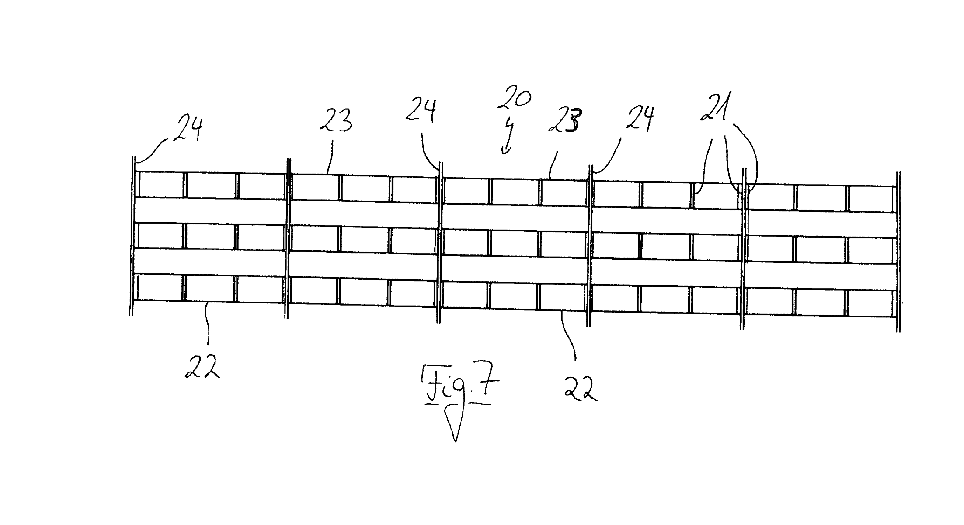

Figur 7 zeigt eine schematische Darstellung eines erfindungsgemäßen Haltegestells. In dieser Darstellung ist die zweidimensionale Vernetzung von Gestelleinheiten gut zu erkennen, welche insbesondere durch die Verwendung der U-förmigen Sturmbleche möglich ist. Der Reihenverbund der einzelnen Einheiten verhindert eine horizontale Verschiebung. Durch die durchlaufenden Profile und den Reihenverbund ist ein größeres Anheben unmöglich. Die Sturmprofile 24 können in der Dachhaut eingebettet sein, sodass sie von außen geschützt und unsichtbar sind.

## Patentansprüche

1. Haltegestell für Solarmodule und/oder Fotovoltaikmodule, **dadurch gekennzeichnet, dass** es mindestens teilweise aus Polymerbeton gefertigt ist.

2. Haltegestell nach Anspruch 1, **dadurch gekennzeichnet, dass** es mindestens teilweise aus Polymerbeton mit Silikon und/oder Acrylharz und/oder Polyesterharz als Bindemittel gefertigt ist, wobei es vorzugsweise mindestens teilweise aus Polymerbeton, umfassend ca. 20 % Polyesterharz und ca. 80 % Quarzsand gefertigt ist.

3. Haltegestell nach einem der Ansprüche 1 oder 2, umfassend mindestens zwei, vorzugsweise vier aus Polymerbeton gefertigte Rahmenelemente (21), wobei jeweils mindestens zwei Rahmenelemente nebeneinander und vorzugsweise jeweils mindestens zwei Rahmenelemente hintereinander angeordnet sind, wobei sowohl die nebeneinander angeordneten Rahmenelemente als auch die hintereinander angeordneten Rahmenelemente jeweils über mindestens ein längliches Verbindungselement (22, 23, 24), beispielsweise Verbindungsblech, insbesondere aus Aluminium, miteinander verbunden sind.

4. Haltegestell nach Anspruch 3, **dadurch gekennzeichnet, dass** die Rahmenelemente (21) jeweils eine Basis, vorzugsweise eine längliche Fußplatte (25) zum Aufsetzen auf einen Untergrund, sowie einen schräg nach oben verlaufenden Modulauflageabschnitt, vorzugsweise eine längliche Auflageleiste (26) umfassen, wobei die Basis und der Modulauflageabschnitt an ihren beiden Enden über einen vorderen Befestigungsabschnitt (27) bzw. einen hinteren Befestigungsabschnitt (28) zur Befestigung der Verbindungselemente (22, 23) miteinander verbunden sind.

5. Haltegestell nach Anspruch 4, **dadurch gekennzeichnet, dass** die nebeneinander angeordneten Rahmenelemente (21) an ihren hinteren Befestigungsabschnitten (28) und vorzugsweise auch an ihren vorderen Befestigungsabschnitten (27) mittels der länglichen Verbindungselemente (23 bzw. 22) miteinander verbunden sind, wobei die Rahmenelemente mit den Verbindungselementen vorzugsweise verschraubt, insbesondere mittels Selbstbohrschrauben verschraubt sind.

6. Haltegestell nach einem der Ansprüche 4 oder 5, **dadurch gekennzeichnet, dass** die Verbindungselemente (22, 23) durch Kantungen ihrer Längsseiten (32, 33, 34, 35) an die Form der Befestigungsabschnitte (27, 28) der Rahmenelemente (21) angepasst sind.

7. Haltegestell nach einem der Ansprüche 4 bis 6, **dadurch gekennzeichnet, dass** sowohl der vordere Befestigungsabschnitt (27) als auch der hintere Befestigungsabschnitt (28) den Modulauflageabschnitt (26) überragen, wobei die Befestigungsabschnitte im unteren Bereich (Bereich der Basis) vorzugsweise eine Vertiefung (36, 37), zum Beispiel Einkerbung aufweisen.

8. Haltegestell nach einem der Ansprüche 3 bis 7, **dadurch gekennzeichnet, dass** die Rahmenelemente (21) seitlich angeordnete Verstärkungswände (38) aufweisen, die vorzugsweise Aussparungen (39, 40) aufweisen.

9. Haltegestell nach einem der Ansprüche 3 bis 8, **dadurch gekennzeichnet, dass** die die hintereinander angeordneten Rahmenelemente (21) miteinander verbindenden Verbindungselemente (24) einen U-förmigen Querschnitt aufweisen.

10. Kit zum Errichten eines Haltegestells nach einem der Ansprüche 1 bis 9, umfassend mindestens zwei Rahmenelemente (21) aus Polymerbeton sowie mindestens ein Verbindungselement (22, 23) zum Verbinden der Rahmenelemente.

11. Verwendung von Polymerbeton zur Herstellung von Haltegestellen für Solarmodule.
